# EUROPEAN PATENT APPLICATION

(11) **EP 4 542 380 A1**
(43) Date of publication of application: **23.04.2025**
(21) Application number: 23841918.8
(22) Date of filing: 31.05.2023
(51) Int. Cl.: G06F 9/445, G06F 8/65

(54) **METHOD AND SYSTEM FOR PROCESSING DATA CONFLICT, AND ELECTRONIC DEVICE AND COMPUTER-READABLE STORAGE MEDIUM**

(30) Priority: 18.07.2022 CN 202210842930
(71) Applicant: Ebaotech Corporation, Shanghai 200433 (CN)
(72) Inventor: XU, Song, Shanghai 200433 (CN); WANG, Jinglong, Shanghai 200433 (CN); SHI, Yu, Shanghai 200433 (CN); WANG, Jiajie, Shanghai 200433 (CN); CHEN, Zhanghong, Shanghai 200433 (CN); CAI, Chungang, Shanghai 200433 (CN); MO, Yuanwu, Shanghai 200433 (CN)
(74) Representative: Nederlandsch Octrooibureau
(86) International application number: PCT/CN2023/097524
(87) International publication number: WO 2024/016850

(57) **Abstract**

The present disclosure relates to the field of computer technologies, and in particular, to a data conflict processing method, system, apparatus, and computer readable storage medium. The method includes: the transaction configuration module sending an export request for target configuration data to an export module in response to a detected export operation; the export module obtaining the target configuration data and generating data description file corresponding to the target configuration data in response to the export request; the transaction configuration module sending the received target configuration data and the data description file to the import module in response to the detected release operation; the import module determining processing result of data of the data table that has a data conflict in the target environment in response to the export request based on the data description file, and applying the received target configuration data to processed data of the data table. Based on the solution of the present disclosure, configuration data can be successfully released into a target environment, which helps improve configuration update efficiency of a transaction service.

## Description

The present application is related to, and claims priority to the Chinese Patent Application Serial No. 202210842930.6, entitled "Data conflict processing method, system, apparatus and computer readable storage medium", filed on July 18, 2022, the entire contents of which are incorporated herein by reference.

### TECHNICAL FIELD

The present disclosure relates to the field of computer technologies, and in particular, to a data conflict processing method, system, apparatus, and computer readable storage medium.

### BACKGROUND ART

In some highly integrated and complex transation transaction systems, the configuration data is usually set in a pre-built independent configuration environment in order to isolate and control some configuration dataset for transaction needs. For example, in an insurance transaction system, configuration data that may need to be set by a transaction analyst that provides an insurance transaction includes insurance product, insurance scheme, tariff table, policy generation rules, translation, code table, index configuration, and so on. The configuration data needs to be set in an independent configuration environment first, and then can be released to a target environment in which an insurance transaction system runs by using a data migration tool.

However, in a process of releasing configuration data to a target environment, problems that the unique key conflict exists between the configuration environment and corresponding transaction data table in the target environment, or corresponding database field increases or decreases usually occurs, the problems includes:
1) The version of the configuration environment is higher than the version of the target environment. During data migration, only the configuration data is released instead of upgrading the application and the corresponding database. Therefore, the database field used in the configuration environment is missing in the target environment.
2) The primary key of the data table of the same transaction data in the target environment has been modified, which causes a conflict between the to-be-released non-configuration data in the configuration environment and the unique key of the data table of the corresponding transaction data in the target environment.
3) The foreign key data corresponding to some data in the configuration data does not exist in the target environment, resulting in an absence of the configuration data. For example, the auditor Zhang San does not exist in the target environment in the insurance transaction audit field.

Based on the foregoing problem, in a process of releasing configuration data, some scripts of data migration tool may fail to execute, and therefore, a process of releasing configuration data to a target environment cannot be normally completed, thereby increasing workload of a developer.

### SUMMARY

The present disclosure provides a data conflict processing method, system, apparatus and computer readable storage medium, which solves the problem of configuration data release failure caused by data conflicts. It ensures the smooth release of configuration data from the configuration environment to the target environment, guarantees the smooth migration of configuration data from the configuration environment to the target environment, and is conducive to improving the efficiency of business service updates and releases.

As a first aspect, a data conflict processing method is provided, which is applied to a system comprising a transaction configuration module, an export module, and an import module, wherein the export module runs in a configuration environment, the import module runs in a target environment, and the method comprises:
the transaction configuration module sending an export request for target configuration data to an export module in response to a detected export operation, wherein the target configuration data is data generated by a user setting parameter of a transaction service provided by the system;
the export module obtaining the target configuration data and generating data description file corresponding to the target configuration data in response to the export request, wherein the data description file comprises source dataset related to the target configuration data and description of an association relationship between data tables in each source dataset;
the transaction configuration module sending the received target configuration data, the data description file and a release request to the import module in response to the detected release operation; and
the import module determining processing result of data of the data table that has a data conflict in the target environment in response to the release request based on the data description file, and applying the received target configuration data to processed data of the data table.

That is, when the configuration data that is in the transaction service system and that is set for the corresponding transaction service, such as the set insurance product, the insurance scheme, the rate table, and the policy generation rule, needs to be released in the target environment used to process the front-end service data, the system may first compare data content of each data set related to the target configuration data in the target environment and data content of each data set related to the configuration data in the configuration environment, and correspondingly process the conflicting data table in the target environment, and then import the configuration data that needs to be released into the target environment.

In this way, it can be ensured that the configuration data can be successfully released to the target environment, which does not cause a release failure due to a conflict between the target environment and data content of some data tables in the configuration environment, thereby improving service update efficiency. In addition, the foregoing solution may facilitate an operation of a transaction analyst, and does not require participation of a developer. The transaction analyst may independently complete a process of setting transaction-related configuration data and releasing corresponding configuration data. Therefore, management efficiency of the transaction analyst for a corresponding service is improved.

In one possible embodiment of the first aspect mentioned above, wherein the export module comprises export rules of the configuration data that are preset, and the export module generating the data description file corresponding to the target configuration data based on the export rules in response to the export request.

The foregoing export rule may be, for example, a preset data description file template, and the template is used to define content of a data description file to be generated when the configuration data is exported. A format of the data description file may be, for example, a xml file, which is not limited herein.

In one possible embodiment of the first aspect mentioned above, wherein the export rules at least comprises: presetting at least one association relationship for each data table in the configuration environment database, and determining the base table in each preset association relationship, wherein the base table corresponds to the transaction service provided by the system.

In one possible embodiment of the first aspect mentioned above, wherein the base table in each association relationship is associated with an association data table by foreign key.

In one possible embodiment of the first aspect mentioned above, wherein the import module determining processing result of data of the data table that has a data conflict in the target environment comprises: the import module obtaining target dataset corresponding to each source dataset from a target environment database, based on the description of association relationship between data tables in each source dataset in the data description file, wherein the association relationship between data tables in the target dataset conforms to the association relationship description between corresponding source dataset data tables; and the import module comparing the target dataset with the corresponding source dataset and determining processing results of data of the data table that has a data conflict in the target environment based on comparison result of the comparing.

In one possible embodiment of the first aspect mentioned above, wherein the import module comparing the target dataset with the corresponding source dataset and determining processing results of data of the data table that has a data conflict in the target environment based on comparison result of the comparing, comprises:
if a unique key of the target dataset base table is consistent with the unique key of the source dataset base table, a primary key of the target dataset base table is consistent with the primary key of the source dataset base table, determining that the data content of the target dataset base table is updated to data content of the source dataset base table in a case in which the source dataset base table and the target dataset base table comprise another inconsistent field;
if a unique key of the target dataset base table is consistent with the unique key of the source dataset base table, but a primary key of the target dataset base table is inconsistent with the primary key of the source dataset base table, determining that data content of the target dataset base table is updated to data content of the source dataset base table, and the primary key of the target dataset base table is modified to primary key of the source dataset base table;
if a unique key of the target dataset base table is inconsistent with unique key of the source dataset base table, and the first field corresponding to unique key of the source dataset base table does not exist in the target dataset base table, determining that the first field is inserted into the target dataset base table, and the data content under unique key field of the source dataset base table is updated to the target dataset base table;
if a unique key of the target dataset base table is inconsistent with unique key of the source dataset base table and the second field corresponding to unique key of the source dataset base table does not exist in the source dataset base table, determining that the second field and data content under the second field are deleted in the target dataset base table.

It can be understood that in a condition in which the unique key of the target dataset base table is consistent with the unique key of the source dataset base table, and the primary key of the target dataset base table is consistent with the primary key of the source dataset base table, content of the target dataset base table needs to be further determined when the source dataset base table and the target dataset base table include another field that is inconsistent with each other. An inconsistent other field refers to a case in which values of other fields are inconsistent, and names of fields are corresponding to a same, that is, values of fields of a same name are different. **In** this way, a case in which data content is updated when other fields in the source data set base table and the target data set base table are consistent can be avoided, which helps save data processing resources and improve efficiency of publishing configuration data.

In addition, it can be understood that the foregoing "first field" and "second field" are only descriptions of fields corresponding to unique keys in different execution conditions, and both are fields corresponding to unique keys in the source dataset base table.

In one possible embodiment of the first aspect mentioned above, wherein the import module comparing the target dataset with the corresponding source dataset and determining processing results of data of the data table that has a data conflict in the target environment based on comparison result of the comparing, further comprises: if no unique key is defined in the target dataset base table, determining that the primary key of the target dataset base table is set to the unique key of the target dataset base table.

In some embodiments, when the source dataset and the target dataset are compared and determined, for example, whether a unique key is defined in the target dataset base table may be first determined, and then the source dataset base table and the target dataset base table are further determined by using the unique key and the primary key. In this way, it can be ensured that data content of the target data set base table can be comprehensively analyzed, which helps to compare validity and accuracy of determining.

In one possible embodiment of the first aspect mentioned above, wherein the import module comparing the target dataset with the corresponding source dataset and determining processing results of data of the data table that has a data conflict in the target environment based on comparison result, further comprises: comparing data content of the association data table in the target dataset with data content of the association data table in the source dataset based on a foreign key in the target dataset base table; and determining processing results of data content of the association data table in the target dataset based on comparison results of the comparing.

In one possible embodiment of the first aspect mentioned above, wherein the determining processing results of data content of the association data table in the target dataset based on the comparison results of the comparing, comprises:
if a unique key of the association data table in the target dataset is consistent with the unique key of the association data table in the source dataset, and a primary key of the association data table in the target dataset is consistent with the primary key of the association data table in the source dataset, determining that the data content of the association data table in the target dataset is updated to data content of the association data table in the source dataset, in a case in which the association data table in the source dataset and the association data table in the target dataset comprise another inconsistent field;
if a unique key of the association data table in the target dataset is consistent with the unique key of the association data table in the source dataset, but a primary key of the association data table in the target dataset is inconsistent with the primary key of the association data table in the source dataset, determining that the data content of the association data table in the target dataset is updated to the data content of the association data table in the source dataset, and the primary key of the association data table in the target dataset is modified to the primary key of the association data table in the source dataset;
if a unique key of the association data table in the target dataset is inconsistent with the unique key of the association data table in the source dataset, and the third field corresponding to unique key of the association data table in the source dataset does not exist in the association data table in the target dataset, determining that the third field is inserted into the association data table in the target dataset, and the data content under unique key field in the association data table in the source dataset is updated to the association data table in the target dataset;
if a unique key of the association data table in the target dataset is inconsistent with the unique key of the association data table in the source dataset, and the fourth field corresponding to the unique key of the association data table in the source dataset does not exist in the association data table in the source dataset, determining that the fourth field and data content under the fourth field are deleted in the association data table in the target dataset.

The comparison process of the foregoing association data table, that is, a process of updating data content of each data table in the target data set in the cascading manner described in the following embodiment, is not described herein again.

It can be understood that, in a condition in which the unique key of the target data set associated with the target data set is the same as the unique key of the source data set associated with the target data set, and the primary key of the target data set associated with the target data set is the same as the primary key of the source data set associated with the target data set, content of the target data set associated with the target data set needs to be further determined when the source data set associated with the target data set includes another inconsistent field. An inconsistent other field refers to a case in which values of other fields are inconsistent, and names of fields are corresponding to a same, that is, values of fields of a same name are different. In this way, a case in which data content is updated when other fields in the association dataset in the source data set are consistent with those in the association dataset in the target data set can be avoided, thereby saving data processing resources and improving efficiency of releasing configuration data.

In addition, it can be understood that the foregoing "third field" and "fourth field" are only descriptions of fields corresponding to unique keys in different execution conditions, and both refer to fields corresponding to unique keys in the association data set in the target data set and the association data set in the source data set.

As a second aspect, a transaction service system is provided, wherein the system comprises a transaction configuration module, an export module, and an import module, wherein the transaction configuration module is configured to: send an export request for target configuration data to an export module in response to a detected export operation, an export request for target configuration data, wherein the target configuration data is data generated by a user setting parameter of a transaction service provided by the system; and send the received target configuration data, the data description file and a release request to the import module in response to the detected release operation;
the export module is configured to: obtain the target configuration data and generating data description file corresponding to the target configuration data in response to the export request, wherein the data description file comprises source dataset related to the target configuration data and description of an association relationship between data tables in each source dataset; and
the import module is configured to: determine processing result of data of the data table that has a data conflict in the target environment in response to the release request based on the data description file, and apply the received target configuration data to processed data of the data table.

As a third aspect, an apparatus is provided, which comprises: one or more processors; and one or more memories; wherein the one or more memories store one or more programs, when the one or more programs are executed by the one or more processors, the apparatus performs the data conflict processing method based on the first aspect.

As a fourth aspect, a computer readable storage medium is provided, wherein the storage medium stores an instruction, and when the instruction is executed on a computer, the computer executes the data conflict processing method based on the first aspect.

### BRIEF DESCRIPTION OF THE DRAWINGS

FIG. 1 illustrates a schematic scenario diagram of releasing trasaction-related configuration data in a target environment.
FIG. 2 illustrate a schematic diagram of a scenario in which transaction-related configuration data is released in target environment based on an embodiment.
FIG. 3 illustrates a schematic flowchart of an implementation procedure of a data conflict processing method based on an embodiment.
FIG. 4 illustrates a schematic diagram of data conflict determining and processing related to Step 310 in the process shown in FIG.3.
FIG. 5 illustrates a structural diagram of a dataset based on an embodiment.
FIG. 6 illustrates a schematic structural diagram of software of a transaction service system based on an embodiment.
FIG. 7 illustrates a schematic structural diagram of server 200 based on an embodiment.

### DETAILED DESCRIPTION OF THE EMBODIMENTS

To facilitate understanding of the technical solutions provided in the embodiments of this application, below is an explanation of the meanings of some relevant field terms related to the present application.
(1) Database, used to store a large number of data entities. The database designing is a process of planning and structuring the relationship between the data entities in the database and these data entities.
(2) Data table, is composed of table name, field in the table and record in the table. Designing data table structure is to define data table file name, and to determine field, field name, field type, and width that are included in the data table, and inputs these data into a computer.
(3) Dataset, is a set formed by multiple interrelated data tables.
(4) Base table, is a basic table associated with another data table in a dataset by using a foreign key.
(5) Primary key, is a combination of one or more columns in a table, and value of the primary key can uniquely identify each row in the table.
(6) Unique key, is a unique identifier field set for the transaction requirement to identify the corresponding transaction field. For example, in some policy data tables, a primary key can be an identity code (for example, an ID) corresponding to each user in the data table, and unique key can be set to an ID number or a name of an policyholder in the data table.
(7) Foreign key, is field in a data table used to associate with another data table. a data table may associate with primary key of another table by using a foreign key, so as to implement association with another data table, and to obtain content such as field text in the another data table, or insert, delete, change, or modify related data content in the another table and so on.
   Wherein, another data table associated through foreign key is a child table relative to a current data table, and the current data table is a parent table relative to an related another data table.
   It can be understood that, in the data of the form, the primary key uniquely identifies each record in the data table. The foreign key can be considered as a copy of the primary key, is copied from a parent table, and is used to establish a relationship between a parent table and a child table. The unique key is used to ensure the uniqueness of a value in the data table.
(8) Cascading, refers to creating an association relationship between one data table and another or more data tables in a form transaction, so that the form can display related data in a hierarchical view.

To make the objectives, technical solutions, and advantages of the embodiments of this application clearer, the following describes in detail the technical solutions provided in the embodiments of this application with reference to the accompanying drawings and a specific implementation.

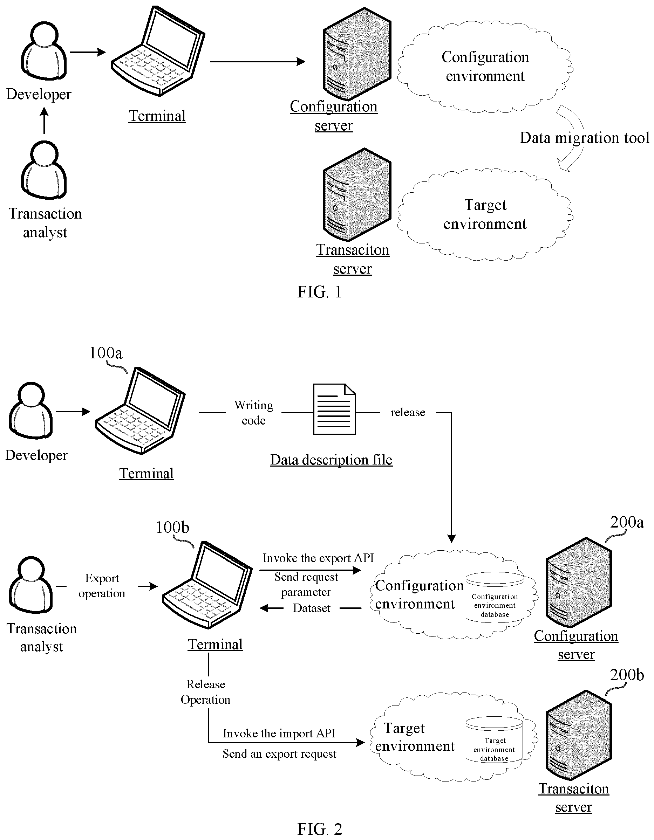

FIG. 1 illustrates a schematic scenario diagram of releasing trasaction-related configuration data in a target environment.

As shown in FIG. 1, the scenario includes terminal and server, where the configuration server provides configuration environment for setting trasaction-related configuration data, and the transaction server provides target environment for running transaction service system. The transaction system running in the target environment can be, for example, an insurance transaction system. The configuration environment may have configuration parameter and database that are the same as the target environment, so as to provide a simulated target environment for developer to set corresponding configuration data based on transaction requirement fed back by transaction analyst.

Referring to the scenario shown in FIG. 1, based on transaction development requirement, currently, if transaction-related configuration data needs to be set by a transaction analyst, after setting (or writing) corresponding transaction configuration data on a corresponding configuration page provided by a configuration environment, a developer needs to release the configuration data in the configuration environment to a target environment by using data migration tool such as Flyway and Liquibase, so as to apply the configuration data in the target environment to a transaction service system running in the target environment.

Based on the scenario shown in FIG. 1, as described above, in a current process of releasing configuration data to the target environment, a problem such as a unique key conflict between the corresponding transaction data table of configuration environment and target environment, or corresponding database field increase or decrease, may cause a configuration data to fail to be released in the target environment. Further, to complete release of the configuration data, workload of the developer increases, and release efficiency of the configuration data is also low.

To resolve the foregoing technical problem, this application provides a data conflict processing method. Specifically, in the method, an association relationship between data tables in a configuration environment is predefined, and a base table in a dataset formed by data tables that are associated with each other is defined. Based on the foregoing defined association relationship and base table, configuration data export rules can be preset, for example, to define data description file content that needs to be generated when the configuration data is exported by using a preset data description file template. **In** this way, when the configuration data is to be released to the target environment, the configuration data and the corresponding generated data description file can be imported to the target environment together, so that a data conflict between the target environment and the configuration environment can be identified based on the data description file. Further, based on the identified data conflict, corresponding data processing is performed on the corresponding data of the data table in the target environment, and then the configuration data is applied to the processed data table in the target environment, so as to complete the process of releasing the configuration data in the target environment.

Wherein, the data description file generated when the data is being configured may include dataset formed by base table And association data table that are related to the configuration data, table file describing association relationships of data tables in each dataset, export condition corresponding to each dataset, and the like. The base table And the association data table can be obtained from the configuration environment database based on the foregoing defined association relationship and the base table.

In this way, it can be ensured that configuration data in the configuration environment is successfully released into the target environment, thereby avoiding a problem of a configuration data release failure caused by a data conflict, and ensuring smooth migration of configuration data from the configuration environment to the target environment. Therefore, a corresponding transaction can also provide a corresponding transaction based on the loaded or updated related configuration data.

In addition, based on the solution of this application, the transaction service system may add a release operation-related control to a configuration page used to set transaction-related configuration data. In this way, after setting the corresponding transaction configuration data on the configuration page, the user can directly release the configuration data to the target environment, thereby greatly improving release efficiency of the configuration data, reducing workload of the developer, and facilitating operation of the transaction person.

It can be understood that both the foregoing transaction person and the developer can be considered as the foregoing transaction person and the developer are management-type users of the transaction service system, that is, such users manage transaction services provided by the transaction service system, including setting corresponding configuration data for the transaction-related modules.

Wherein, the configuration data can be generated based on setting operation of the user on corresponding configuration page before the user triggers the data export process. For example, a user may set configuration data of corresponding transaction on configuration page provided by transaction system that runs corresponding to a configuration environment. Configuration data of an insurance transaction is used as an example. The configuration data may include insurance products, insurance schemes, tariff tables, policy generation rules, translations, code tables, and index configuration. After the user completes the configuration datasetting of the corresponding transaction on the configuration page, or in other cases of importing the configuration data into the target environment, configuration data can be selected on the configuration page, for example, by clicking export data on the configuration page.

It can be understood that, in some embodiments, the foregoing configuration environment may run on a configuration/releasing server, the foregoing target environment may run on a transaction server, and the transaction server can be, for example, an insurance transaction server. In other embodiments, the foregoing configuration environment and the target environment may run on a same server, which is not limited herein.

In addition, database corresponding to the foregoing configuration environment and database corresponding to the target environment have a same data table resource, so as to provide data support for transaction system running in each environment. Therefore, based on each dataset (hereinafter referred to as source data) that is obtained by matching the foregoing data description file from the database corresponding to the configuration environment, corresponding data tables and data table field content (hereinafter referred to as target data) that can be obtained by matching in the target environment can be compared with fields such as the unique key and the primary key in the matched target data to determine whether a data conflict exists. The data conflict may include, for example, a case in which the source data is consistent with the unique key of the corresponding data table in the target data, the primary key is consistent, and the source data is consistent with the unique key of the corresponding data table in the target data, but the primary key is inconsistent.

In a process of importing the configuration data into the target environment, if it is determined that the foregoing data conflicts with each case, a process of importing the configuration data into the target environment can be completed after corresponding data processing is performed on a related data table in the target environment based on a determining result. Specific data conflict and data processing process for the corresponding target dataset are described in detail in the following, and details are not further described herein again.

FIG. 2 illustrate a schematic diagram of a scenario in which transaction-related configuration data is released in target environment based on an embodiment.

As shown in FIG. 2, the scenario includes a terminal 100a, a terminal 100b, a configuration server 200a, and a transaction server 200b. a user of the terminal 100a can be a developer, and a user of the terminal 100b can be a transaction analyst.

The developer may access the configuration server 200a by using the terminal 100a, and preset export rules in the configuration environment provided by the configuration server 200a. For example, the developer may predefined an association relationship between data tables in the configuration environment, and define dataset base table formed by the data tables that are associated with each other. Further, export rules for exporting configuration data can be defined, and the export rules can be limited to that when the configuration data is exported, data description file corresponding to the configuration data needs to be generated and exported together.

For example, a data description file template of xml type can be preset in configuration environment, and content of data description file generated when the configuration data is exported can be defined in the template. The file content may store at least one dataset related to the configuration data and a table file describing a data table association relationship in each dataset. Each dataset may include a base table And another data table associated with the base table. The table file may record related parameters such as base table, and name, primary key, unique key, and foreign key of each dataset. In addition, the description file may further include an export condition of each dataset, for example, an ID corresponding to a parent table at a highest level in each dataset is set to an export condition.

In this way, after completing setting the configuration data of the corresponding transaction by accessing the configuration environment of the configuration server 200a by the terminal 100b, the transaction analyst may initiate, by using the terminal 100b, an export operation on the corresponding configuration data, so as to match the configuration data in the configuration environment to the corresponding dataset based on the foregoing preset data description file, and further generate the source data packet together with the configuration data and the data description file, and return the source data packet to the terminal 100b. Further, the transaction analyst may initiate a release operation, and release the obtained data packet that includes the configuration data and the related dataset to the target environment provided by the transaction server 200b, so as to apply the configuration data to the transaction system running in the target environment.

Referring to FIG. 2, when the transaction analyst initiates the export operation by using the terminal 100b, the terminal 100b may invoke the export API of the configuration environment to send request parameter for the corresponding configuration data to the configuration server 200a, where the request parameter may include, for example, a dataset name that needs to be exported and parameters that meets an export condition of the corresponding dataset, and the exported dataset is related to the exported configuration data. When the transaction analysis person initiates the release operation by using the terminal 100b, the terminal 100b may invoke the import API of the target environment to send the data packet and the export request to the configuration server 200b, so as to trigger a release process such as determining a data conflict in the target environment, performing corresponding data processing, and completing configuration data application in the target environment. Details are described below, and details are not described herein again.

Based on the scenario shown in FIG. 2, it can be understood that the solution for processing data conflict provided in this embodiment of this application can effectively simplify an implementation process in which a transaction analyst configures corresponding transaction data on a transaction system. For example, without involvement of a developer, a transaction analyst can set configuration data on corresponding configuration interface provided by a transaction system, and release the configuration data to target environment for executing transaction processing. In this application solution, configuration data release failure problem caused by the data conflict can be effectively avoided, which helps improve user experience of a transaction analyst.

In addition, the solution for processing data conflict provided in this embodiment of this application can also effectively reduce workload of developers. The developer can write in a preset data description file through coding in a configuration environment in advance, and the data description is referred to as export rules, and open corresponding transaction configuration page to the transaction analyst to independently set configuration parameters, to meet the requirement of the transaction analyst for setting configuration data based on a transaction requirement, and greatly improve efficiency of setting configuration data for a transaction-related setting.

It can be understood that, based on the data conflict processing method provided in this embodiment of this application, an applicable transaction system includes function module running on a transaction server 200b and function module running on a terminal 100b. **In** other embodiments, the transaction server 200b may further be another electronic device that is embedded or coupled with one or more processors, such as a desktop computer, a laptop computer, a handheld computer, or a netbook, or that can access a network. The terminal 100b can be, for example, an electronic device such as a desktop computer, a laptop computer, a tablet computer, or a mobile phone, which is not limited herein.

It can be understood that the foregoing terminal 100a that is configured to export preset rules to the configuration server 200a is an electronic device such as a desktop computer, a laptop computer, a tablet computer, or a mobile phone. The configuration server 200a can be another electronic device, such as a desktop computer, a laptop computer, a handheld computer, or a netbook that is embedded or coupled with one or more processors, or that can access a network, which is not limited herein.

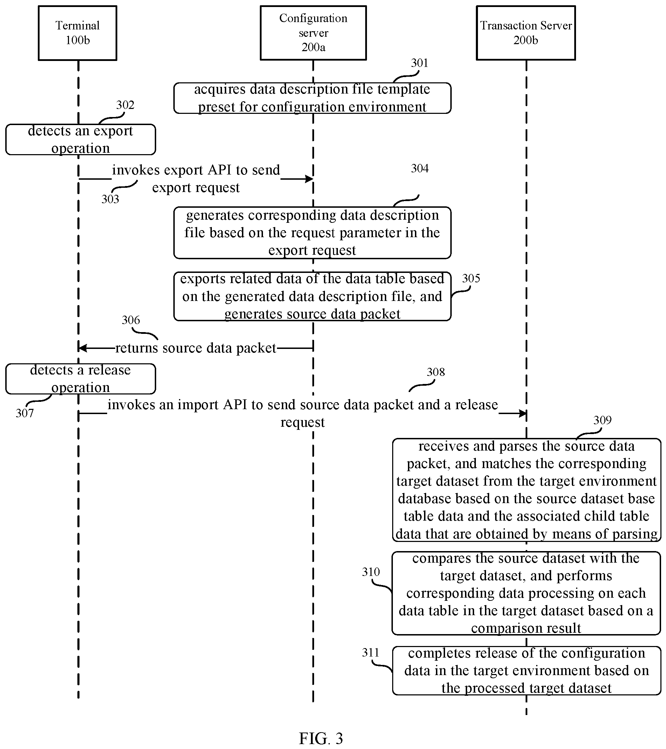

Based on the foregoing scenario shown in FIG. 2, FIG. 3 illustrates a schematic flowchart of an implementation procedure of a data conflict processing method based on an embodiment. The process shown in FIG. 3 mainly relates to interaction between the terminal 100b and the configuration server 200a, transaction server 200b.

Specifically, as shown in FIG. 3, the procedure includes the following steps:
301: Configuration server 200a acquires data description file template preset for configuration environment.

For example, referring to the foregoing scenario shown in FIG. 2, the developer may preset the configuration data export rules in the configuration environment by writing code, for example, define a data description file template for configuration data that needs to be exported. The data description file template can be, for example, defining a table structure of a dataset by using a xml file, an association relationship between data tables in the dataset, and a corresponding dataset export condition. When defining the above xml file, the developer can specify the xml file format by designing the xml schema definition. In this way, when the configuration data related to different transactions is exported to the configuration server 200a, the source data packet can be generated by using a uniform xml file format, to be released to the target environment.

In the foregoing preset data description file, the defined dataset table structure refers to the structure of record, name of each dataset, data table name, field, data table association relationship, base table data, an export condition, and the like. Association relationships of data tables in each dataset can be represented by using the foreign key name and the foreign key value. It can be understood that a database in which each data table in the dataset is located includes a database corresponding to a configuration environment, and also includes a database corresponding to a target environment, which is not limited herein.

Define an association relationship of each data table in the dataset, so as to determine an association relationship between base table And another data table by using the foreign key in each dataset, where the base table is parent table in a corresponding dataset, and the another data table in the dataset is child table of different levels of the base table. The primary key, the unique key, or the like of base table in a dataset can be considered as the primary key, the unique key, or the like of corresponding dataset. The name, the primary key, the unique key, base table data, and the like of each dataset that completes definition can be recorded in the foregoing defined dataset table structure.

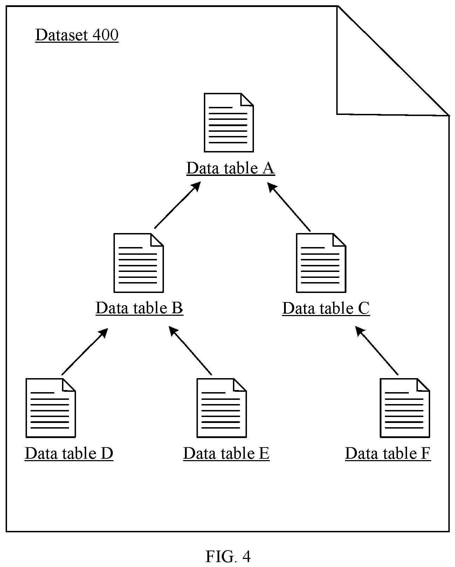

Referring to the dataset 400 shown in FIG. 4, a data table A at a first level is a base table, a data table B at a second level and a data table C at a second level are child tables of the base table A, a data table D at a third level and a data table E are child tables of the data table B, a data table F is a child table of the data table C, and the data tables D, E, and F are also child tables of the base table A.

For example, the policy generation rule configuration data is corresponding to a dataset, and the base table A can be a data table defining rule event. Correspondingly, the data table B, which is a child table of the data table A, can be a data table that defines rule driver, and the data table C can be a data table that defines rule event type. Further, the data table D as a child table of the data table B can be a data table defining rule group, and the child table of the data table D can be a data table defining rule in each rule group. No limitation is imposed here.

It can be understood that, in a dataset, the foreign key in a child table points to the primary key in the parent table, and the parent table is a foreign key table of the child table.

It can be understood that, when writing the configuration page for the transaction analyst to operate, the developer may set name, export condition, and the like of each dataset in the foregoing defined dataset table as an optional option, so that the transaction analyst can select corresponding dataset, export condition, and the like as request parameter when the transaction analyst operates and releasees the transaction-related data.

The defined dataset export condition is the condition for exporting a dataset. The exporting conditions corresponding to different datasets can be different. As an example, in an insurance transaction system, submodules of each insurance transaction configuration module can be corresponding to one dataset. For example, the insurance rule module may have rule group submodule, rule submodule, and rule event submodule. Different submodules have corresponding datasets in database, and the datasets may respectively correspond to different export conditions. For example, dataset corresponding to rule submodule can be exported based on RuleId, dataset corresponding to rule group submodule can be exported based on GroupId, and dataset corresponding to rule event submodule can be exported based on EventId.

It can be understood that the export condition can be set to simple parameters, for example, the foregoing RuleId. Therefore, when exporting the dataset, the exporting condition does not need to be verified by using various calculations, and corresponding dataset can be exported provided that transmitted parameters meets preset exporting condition. If the parameter passed when exporting the dataset is incorrect, the dataset cannot be exported. For example, if the RuleId passed when exporting the dataset is 0000, but the dataset whose RuleId is 0000 does not exist in the database, the dataset exported accordingly is null.

It can be understood that, after data description file is predefined in configuration environment, for configuration data export or release of different transactions, a developer does not need to correspondingly configure or define export rules, thereby reducing workload of the developer.

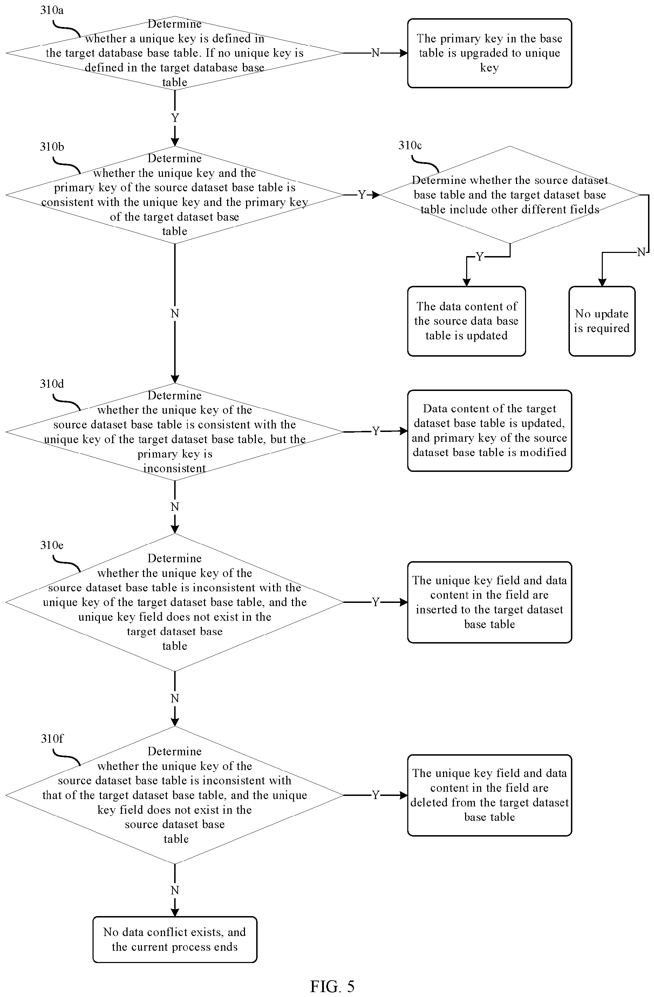

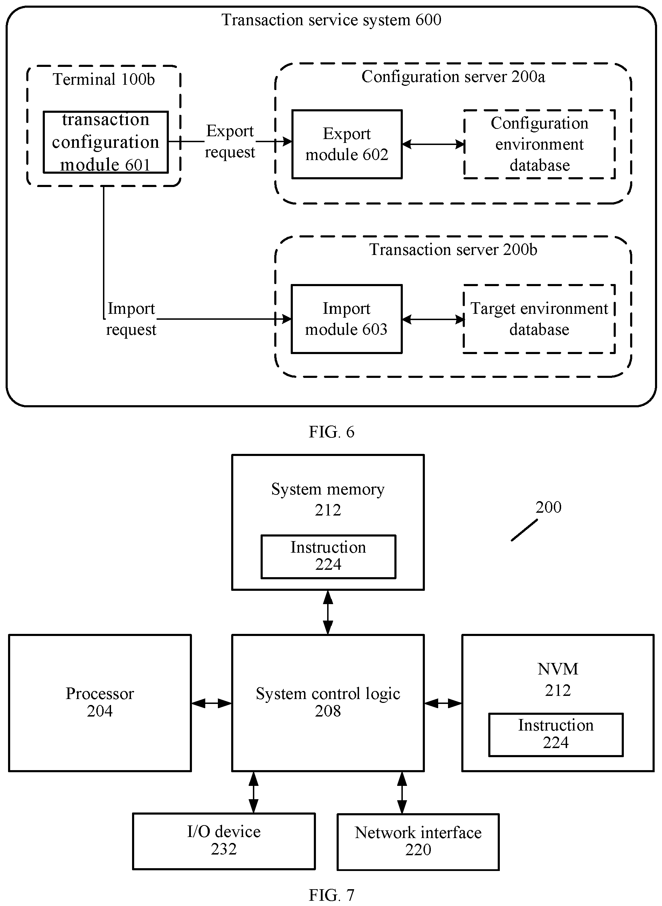

It can be understood that the design of the xml schema definition may give specifications and constraints for configuring the data matching dataset for the export rules and defining the export condition. For example, only the <keys>, <columns>, <orders>, and <exceptions> sub-labels can appear under the <table> label in the xml schema definition. If other sub-labels appear, an error is reported. In this way, a probability of an error when the dataset is matched for configuration data can be reduced, and efficiency of matching the dataset can be improved.

In other embodiments, the preset configuration data export rules in the configuration environment may also be implemented by using a structured query language (sql), for example, a ".sql" file is written in advance, which is not limited herein.

302: Terminal 100b detects an export operation.

For example, referring to the foregoing scenario shown in , transaction analyst completes configuration operation on configuration page provided by the terminal 100b. After corresponding configuration data is also generated on the configuration server 200a, corresponding export button can be displayed on the configuration page of the terminal 100b. In this case, the transaction analyst clicks the export button on the configuration page, and the terminal 100b may detect the export operation and trigger sending of the export request to the configuration server 200a.

It can be understood that in other embodiments, the transaction analyst may also select the transaction-related configuration data and the related dataset that have been set on the configuration page provided by the terminal 100b, and click an export button, so that the terminal 100b sends an export request to the configuration server 200a, which is not limited herein.

303. The terminal 100b invokes export API to send export request to the configuration server 200a.

For example, the export request includes corresponding request parameter, and the request parameter includes, for example, dataset name corresponding to configuration data that needs to be released and export condition of corresponding dataset that is selected by transaction analyst on configuration page. When detecting the foregoing export operation, the terminal 100b may invoke the export API provided by the configuration server 200a to send an export request, so as to request the configuration server 200a to export configuration data that needs to be released. It can be understood that, in response to the export request, the configuration server 200a may return, to the terminal 100b, the source data packet generated for the corresponding configuration data. For details, refer to the following steps 304 to 306. Details are not described herein again.

304: Configuration server 200a generates corresponding data description file based on the request parameter in the export request.

For example, the configuration server 200a may match, based on the request parameter in the export request, each dataset related to the to-be-released configuration data, and further writes, based on definition of dataset table structure in preset data description file template, name, data table name, field, and dataset association relationship that are of each dataset and that are obtained by means of matching into the dataset table. Further, the dataset table can be combined with predefined association relationship and an export condition of each data table in the dataset to generate corresponding data description file.

In other words, the configuration server 200a may generate, based on the data description file template obtained in step 301, data description file corresponding to the received request parameter.

305: Configuration server 200a exports related data of the data table based on the generated data description file, and generates source data packet.

For example, the configuration server 200a may export related data of the data table in each dataset from the configuration environment database based on the data description file generated in the foregoing step 304, including field in each data table and value in corresponding field, such as primary key and value of unique key. For each data table exported from the configuration environment database, the configuration server 200a may correspondingly generate text file used to describe each data table, such as Comma-Separated Values (CSV) file, also referred to as character Comma-Separated Values file. Further, the configuration server 200a may package the foregoing data description file and the CSV file describing each data table to generate a source data packet.

306: Configuration server 200a returns source data packet to the terminal 100b.

For example, the configuration server 200a may send the generated source data packet to the terminal 100b in response to an export request sent by the terminal 100b.

307. Terminal 100b detects a release operation.

For example, the terminal 100b may jump to the release page after receiving the source data packet returned by the configuration server 200a, so that the transaction analyst may click the release button on the release page to perform the release operation. After detecting the release operation, the terminal 100b may send the received source data packet to the transaction server 200b, and send an export request to the transaction server 200b.

308. Terminal 100b invokes an import API to send source data packet and a release request to the transaction server 200b.

For example, when detecting the foregoing releasing operation, the terminal 100b may invoke an import API provided by the transaction server 200b, send a request for releasing configuration data to the transaction server 200b, that is, an export request, and send the received source data packet to the transaction server 200b.

309: Transaction server 200b receives and parses the source data packet, and matches the corresponding target dataset from the target environment database based on the source dataset base table data and the associated child table data that are obtained by means of parsing.

For example, the transaction server 200b receives a source data packet, and may read and parse the source data packet to a memory. The data description file obtained by parsing the source data packet includes each dataset table and each dataset data table association relationship. Each CSV file obtained by parsing the source data packet may correspondingly describe corresponding data of the data table. For ease of description, each dataset obtained by parsing the source data packet is referred to as a source dataset, and a data table corresponding to each CSV file is referred to as a source dataset. Further, the transaction server 200b may read the corresponding target dataset from the target environment database to the memory based on the data description file obtained by means of parsing.

A process of reading the corresponding target dataset from the target environment database based on the data description file includes: First, the transaction server 200b may match, in the target environment database based on the source dataset and the export condition described in the data description file obtained by means of parsing, base table data corresponding to the base table in the source dataset. For example, all data tables that match primary key or unique key of the source dataset are obtained from memory, and are used as base table of the target dataset. In addition, all parent tables associated with foreign key in the base table And data of all related child tables are obtained in memory. Further, the transaction server 200b may combine the base table data and the association child table data that are obtained by matching from the target environment database with the target dataset.

Further, the transaction server 200b may determine whether structure of the foregoing obtained target data table is the same as structure of a same name data table in each data table obtained by means of parsing in the source data packet. If the source dataset name does not match the same target data table name, the transaction server 200b ignores the source dataset obtained by means of parsing.

It can be understood that base table in each dataset defines foreign key table and foreign key. Therefore, corresponding foreign key table can be found by using foreign key in the base table. Further, the foreign key field and foreign key value that match the base table data can be located in the target environment database, and data that is associated with the base table, that is, data of the foreign key table, is found by using the foreign key value.

310: Transaction server 200b compares the source dataset with the target dataset, and performs corresponding data processing on each data table in the target dataset based on a comparison result.

For example, the transaction server 200b may compare source datasets that are parsed into source data packet in memory with corresponding target datasets that are obtained from the target environment database, for example, compare base table data of the source dataset with base table data of the target dataset, including unique key and primary key that are of the source dataset and the target dataset. In some embodiments, unique key of the two can be preferentially compared, so as to compare primary key of the two. For the foregoing comparison process and a process of performing corresponding data processing on the target dataset based on the comparison result, refer to a determining processing procedure shown in FIG. 5. The procedure includes the following steps:
310a. Determine whether a unique key is defined in the target database base table. If no unique key is defined in the target database base table, that is, a determining result is no, the primary key in the base table is upgraded to the unique key. If the determining result is yes, continue to perform the following step 310b.
310b. Determine whether the unique key and the primary key of the source dataset base table is consistent with the unique key and the primary key of the target dataset base table. If the unique key and the primary key of the source dataset base table is consistent with the unique key and the primary key of the target dataset base table, that is, a determining result is yes, a process of step 3 10c of determining whether other field is consistent is further performed. If the determining result is no, continue to perform the following step 310d.
310c. Determine whether the source dataset base table and the target dataset base table include other different fields. If the determining result is yes, the data content of the target dataset base table is updated, that is, the data content of the source dataset base table is updated to the data content of the target dataset base table. If the determining result is no, it indicates that the source dataset base table is consistent with another field of the target dataset base table, and no update is required, data content of the target dataset base table is not updated.

An inconsistent other field means that values of other fields are inconsistent, and name of the field is correspondingly same, that is, a case in which values of fields of same name are different, which is not described herein again.

310d. Determine whether the unique key of the source dataset base table is consistent with the unique key of the target dataset base table, but the primary key is inconsistent. If the unique key of the source dataset base table is consistent with the unique key of the target dataset base table, that is, a determining result is yes, data content of the target dataset base table is updated, and primary key of the source dataset base table is modified to primary key of the target dataset base table. If the determining result is no, continue to perform the following step 310e.

310e. Determine whether the unique key of the source dataset base table is inconsistent with the unique key of the target dataset base table, and the unique key field does not exist in the target dataset base table. If the unique key of the source dataset base table is inconsistent with the unique key of the target dataset base table, and the unique key field does not exist in the target dataset base table, that is, a determining result is yes, the unique key field and data content in the field are inserted to the target dataset base table. If the determining result is no, continue to perform the following step 310f.

310f. Determine whether the unique key of the source dataset base table is inconsistent with that of the target dataset base table, and the unique key field does not exist in the source dataset base table. If the unique key of the source dataset base table is inconsistent with that of the target dataset base table, and the unique key field does not exist in the source dataset base table, that is, a determining result is yes, the unique key field and data content in the field are deleted from the target dataset base table. If the determining result is no, it indicates that no data conflict exists between the configuration environment and the target environment, and the current process ends. The following step 311 can be continued.

It can be understood that, after the foregoing comparison process is completed for the base table of the source dataset and the corresponding target dataset, after processing of the base table data in the target dataset, all association data tables in each dataset can be repeatedly performed in a cascading manner through the foregoing comparison process described in 310a to 310f, so as to perform corresponding data processing on each data table associated with the base table in the target dataset.

It can be understood that after the processing of the related data table content in the target dataset is completed, the transaction server 200b may further dynamically update foreign key of specified table, for example, add a foreign key to a specified field in a processed base table, and details are not described herein again.

311: Transaction server 200b completes release of the configuration data in the target environment based on the processed target dataset.

For example, after completing corresponding data processing on the target dataset in step 310, the transaction server 200b may correspondingly apply the to-be-released configuration data to each target dataset based on the processed target dataset, and update the to-be-released configuration data to the target environment database. Therefore, the transaction server 200b may invoke the corresponding dataset in the target environment database and process the corresponding transaction after the corresponding dataset is released when responding to the transaction request at the front end of the transaction service system. Details are not described herein again.

It can be understood that, in a process in which the transaction server 200b performs corresponding data processing on each target dataset in step 310, data before and after processing such as insertion, update, and deletion can be recorded, as well as raw data. For example, data before and after processing such as inserting, updating, and deleting, and raw data can be recorded in json format, where the inserted data record is InsertRecordMap, the deleted data record is DeleteRecordMap, and the updated data record is UpdateRecordMap. For saving storage resources, if data content of data table is relatively large, for example, more than 10,000 pieces of data need to be processed in the foregoing data processing process, a data processing process in the data table may not be recorded.

It can be understood that, based on the foregoing implementation procedures of steps 301 to 311, in the data conflict processing method provided in this embodiment of this application, configuration data in configuration environment can be successfully released to target environment, thereby avoiding problem of configuration data release failure caused by data conflict. Therefore, corresponding transaction can also provide corresponding transaction based on loaded or updated related configuration data. **In** addition, configuration data release operation can be directly performed on configuration page, which helps improve configuration data release efficiency and reduce workload of developer, and also facilitates release of configuration data by transaction person, thereby improving management efficiency of transaction person for corresponding transaction.

It can be understood that, based on the data conflict processing method provided in this embodiment of this application, preset export rules process needs to be performed only once, that is, the foregoing step 301 can be performed only once when the procedure shown in FIG. 3 is first implemented, the configuration server 200a may export the configuration data and the corresponding dataset based on the preset export rules in a process of subsequently releasing configuration data to the target environment, and the transaction server 200b may automatically identify a data conflict when receiving the imported configuration data and the corresponding dataset, and perform corresponding data processing on the corresponding data table in the target environment.

**In** other words, in a process of releasing the configuration data in the configuration environment to the target environment, if a data conflict such as a unique key conflict of corresponding dataset base table, non-existence of some fields, or non-existence of foreign key is encountered, the transaction system can automatically process the data conflict, and no manual intervention is required. Therefore, operation and maintenance costs of the transaction system can be saved.

In addition, when performing corresponding data processing based on the identified data conflict, the transaction server 200b may further provide data change details before and after data processing, for easier identification and retrieval of relevant data during subsequent error troubleshooting.

FIG. 6 illustrates a schematic structural diagram of software of a transaction service system based on an embodiment.

As shown in FIG. 6, the transaction service system 600 may include a transaction configuration module 601, an export module 602, and an import module 603. For example, the transaction service system 600 can be, for example, an insurance transaction system that provides a platform for an insurance transaction, which is not limited herein.

The transaction configuration module 601 may run on the terminal 100b to provide configuration page for the transaction personnel, and the transaction personnel may set transaction-related configuration data on the configuration page, and may further perform an operation on the configuration page to export the configuration data from the configuration environment and release the configuration data to the target environment. It can be understood that the transaction configuration module 601 may further run on the terminal 100a, so that developer presets configuration data export rules, or sets configuration data for transaction person, releasees configuration data in target environment, and the like. For specific function performed by the export module 602, refer to related descriptions in the foregoing steps 302 and 303. Details are not described herein again.

The export module 602 can be run on the configuration server 200a, and is configured to obtain data description file template that is preset by the developer in the configuration environment, and is configured to interactively obtain, based on a related parameter of an export request sent by the terminal 100b, corresponding configuration data, export related datasets, association data of the data table in each dataset, and an association relationship formed between base table in each dataset and another association data table by using a foreign key, to generate corresponding data description file and export the configuration data to the configuration environment. For specific function performed by the export module 602, refer to related descriptions in the foregoing steps 301, 304, and 306. Details are not described herein again.

The import module 603 may run on the transaction server 200b, and is configured to receive and parse source data packet forwarded by the terminal 100b, where the source data packet includes the foregoing to-be-posted configuration data in the target environment and corresponding generated data description file. The import module 603 may further interact with the target environment database to obtain the target dataset base table And other associated data of the data table to form the target dataset based on the parsed data description file, and then compare the target dataset with the source dataset, and perform correlation processing on the related data of the data table in the target dataset based on the comparison result. For specific function performed by the export module 603, refer to related descriptions in the foregoing steps 309 to 311. Details are not described herein again.

It can be understood that, in a transaction system implemented based on the solution for processing data conflict provided in this embodiment of this application, a process of releasing configuration data from a configuration environment to a target environment does not need to be implemented by a developer by using corresponding code compiled by using data migration tool, and the transaction system in the release process may process, by itself, a data conflict between the configuration environment and the target environment.

FIG. 7 illustrate a schematic structural diagram of server 200 based on an embodiment.

It can be understood that, in this embodiment of this application, the server 200 can be the foregoing configuration server 200a that provides a configuration environment, or can be the foregoing target environment transaction server. It can be understood that some modules of the transaction system can be run on the server 200, for example, an export module 602 of the transaction system 600 shown in FIG. 6 runs on the configuration server, and an import module 603 of the transaction system 600 shown in FIG. 6 runs on the transaction server. In other embodiments, the export module 602 and the import module 603 of the transaction service system 600 may also run on the same server 200, which is not limited herein.

As shown in FIG. 7, in some embodiments, the server 200 may include one or more processors 204, a system control logic 208 connected at least one of the processors 204, a system memory 212 connected to the system control logic 208, a non-volatile memory (NVM) 212 connected to the system control logic 208, and a network interface 220 connected to the system control logic 208.

In some embodiments, the processor 204 may include one or more single-core or multi-core processors. In some embodiments, the processor 204 may include any combination of a general purpose processor and a dedicated processor (e.g., a graphics processor, an application processor, a baseband processor, or the like). In an embodiment in which the server 200 uses the eNB (Evolved Node B) or the RAN (Radio Access Network) controller, the processor 204 can be configured to execute various compliant embodiments, for example, the embodiments shown in FIG. 2 to FIG. 6.

In some embodiments, the system control logic 208 may include any suitable interface controller to provide any suitable interface to at least one of the processors 204 and/or any suitable device or component communicating with the system control logic 208.

In some embodiments, the system control logic 208 may include one or more memory controllers to provide an interface connected to the system memory 212. The system memory 212 can be configured to load and store data and/or instructions. In some embodiments, the memory 212 of the server 200 may include any suitable volatile memory, such as a suitable dynamic random access memory (DRAM).

The NVM/memory 212 may include one or more tangible, non-temporary, computer-readable media for storing data and/or instructions. In some embodiments, the NVM/memory 212 may include any suitable non-volatile memory such as a flash memory and/or any suitable non-volatile storage device such as at least one of an HDD (Hard Disk Drive), a CD (Compact Disc) drive, a DVD (Digital Versatile Disc) drive.

The NVM/memory 212 may include a part of a storage resource on an apparatus for installing the server 200, or can be accessed by a device, but may not be a part of the device. For example, the NVM/storage 212 can be accessed over the network via the network interface 220.

In particular, the system memory 212 and the NVM/memory 212 may respectively include a temporary copy and a permanent copy of the instruction 224. The instruction 224 may include an instruction that causes the server 200 to implement the method shown in FIG. 3 to FIG. 4 when at least one of the processor 204 is executed. In some embodiments, instructions 224, hardware, firmware, and/or software components thereof may alternatively/alternatively be placed in system control logic 208, network interface 220, and/or processor 204.

The network interface 220 may include a transceiver configured to provide a radio interface for the server 200 to communicate with any other suitable device (e.g., front-end module, antenna, etc.) over one or more networks. In some embodiments, the network interface 220 can be integrated into other components of the server 200. For example, the network interface 220 can be integrated into at least one of the processor 204, the system memory 212, the NVM/memory 212, and the firmware device (not shown) with instructions. When at least one of the processor 204 executes the instructions, the server 200 implements the methods shown in FIG. 2 to FIG. 6.

The network interface 220 may further include any suitable hardware and/or firmware to provide a multi-input multi-output radio interface. For example, the network interface 220 can be a network adapter, a wireless network adapter, a telephone modem, and/or a wireless modem.

In an embodiment, at least one of the processors 204 can be encapsulated with logic of one or more controllers for system control logic 208 to form a SiP. In an embodiment, at least one of the processors 204 can be integrated on the same die as one or more controllers for system control logic 208 to form an on-chip system (SoC).

The server 200 may further include an input/output (I/O) device 232. The I/O device 232 may include a user interface, so that a user can interact with the server 200. The peripheral component interface is designed so that the peripheral component can also interact with the server 200. In some embodiments, the server 200 further includes a sensor configured to determine at least one of environmental conditions and location information related to the server 200.

In some embodiments, the user interface may include, but is not limited to, a display (e.g., a liquid crystal display, a touchscreen display, etc.), a speaker, a microphone, one or more cameras (e.g., still image cameras and/or cameras), flashlights (e.g., LED flashes), and keyboards.

In some embodiments, peripheral component interfaces may include but are not limited to non-volatile memory ports, audio jacks, and power interfaces.

In some embodiments, the sensor may include but is not limited to a gyroscope sensor, an accelerometer, a proximity sensor, an ambient light sensor, and a positioning unit. The positioning unit may also be part of or interact with the network interface 220 to communicate with components of the positioning network (e.g., Global Positioning System (GPS) satellites).

The reference to "one embodiment" or "embodiment" in the specification means that a specific feature, structure, or feature described with reference to the embodiments is included in at least one example implementation solution or technology disclosed in the embodiments of this application. The phrase "in one embodiment" in each place in the specification does not necessarily refer to all the same embodiments.

The disclosure of the embodiments of this application further relates to an operation apparatus used to execute the text. The apparatus can be constructed for a specific purpose or may include a general-purpose computer that is selectively activated or reconfigured by a computer program stored in the computer. Such a computer program can be stored in a computer readable medium, such as but is not limited to any type of disk, including a floppy disk, an optical disc, a CD-ROM, a magneto-optical disc, a read-only memory (ROM), a random access memory (RAM), an EPROM, an EEPROM, a magnetic or optical card, an application specific integrated circuit (ASIC), or any type of medium suitable for storing an electronic instruction, and each can be coupled to a computer system bus. In addition, the computer mentioned in the specification may include a single processor or can be an architecture involved in multiple processors that use the added computing capability.

In addition, the language used in this specification has been selected primarily for readable and instructive purposes and may not be selected for the subject matter disclosed in the description or limitation. Therefore, the embodiments of this application are disclosed to illustrate and not limit the scope of the concepts discussed herein.

## Claims

1. A data conflict processing method, applied to a system comprising a transaction configuration module, an export module, and an import module, wherein the export module runs in a configuration environment, the import module runs in a target environment, and the method comprises:
the transaction configuration module sending an export request for target configuration data to an export module in response to a detected export operation, wherein the target configuration data is data generated by a user setting parameter of a transaction service provided by the system;
the export module obtaining the target configuration data and generating data description file corresponding to the target configuration data in response to the export request, wherein the data description file comprises source dataset related to the target configuration data and description of an association relationship between data tables in each source dataset;
the transaction configuration module sending the received target configuration data, the data description file and a release request to the import module in response to the detected release operation; and
the import module determining processing result of data of the data table that has a data conflict in the target environment in response to the release request based on the data description file, and applying the received target configuration data to processed data of the data table.

2. The method of claim 1, wherein the export module comprises export rules of the configuration data that are preset, and
the export module generating the data description file corresponding to the target configuration data based on the export rules in response to the export request.

3. The method of claim 2, wherein the export rules at least comprises:
presetting at least one association relationship for each data table in the configuration environment database, and determining the base table in each preset association relationship, wherein the base table corresponds to the transaction service provided by the system.

4. The method of claim 3, wherein the base table in each association relationship is associated with an association data table by foreign key.

5. The method of claim 1, wherein the import module determining processing result of data of the data table that has a data conflict in the target environment comprises:
the import module obtaining target dataset corresponding to each source dataset from a target environment database, based on the description of association relationship between data tables in each source dataset in the data description file, wherein the association relationship between data tables in the target dataset conforms to the association relationship description between corresponding source dataset data tables; and
the import module comparing the target dataset with the corresponding source dataset and determining processing results of data of the data table that has a data conflict in the target environment based on comparison result of the comparing.

6. The method of claim 5, wherein the import module comparing the target dataset with the corresponding source dataset and determining processing results of data of the data table that has a data conflict in the target environment based on comparison result of the comparing, comprises:
if a unique key of the target dataset base table is consistent with the unique key of the source dataset base table, a primary key of the target dataset base table is consistent with the primary key of the source dataset base table, determining that the data content of the target dataset base table is updated to data content of the source dataset base table in a case in which the source dataset base table and the target dataset base table comprise another inconsistent field;
if a unique key of the target dataset base table is consistent with the unique key of the source dataset base table, but a primary key of the target dataset base table is inconsistent with the primary key of the source dataset base table, determining that data content of the target dataset base table is updated to data content of the source dataset base table, and the primary key of the target dataset base table is modified to primary key of the source dataset base table;
if a unique key of the target dataset base table is inconsistent with unique key of the source dataset base table, and the first field corresponding to unique key of the source dataset base table does not exist in the target dataset base table, determining that the first field is inserted into the target dataset base table, and the data content under unique key field of the source dataset base table is updated to the target dataset base table;
if a unique key of the target dataset base table is inconsistent with unique key of the source dataset base table and the second field corresponding to unique key of the source dataset base table does not exist in the source dataset base table, determining that the second field and data content under the second field are deleted in the target dataset base table.

7. The method of claim 6, wherein the import module comparing the target dataset with the corresponding source dataset and determining processing results of data of the data table that has a data conflict in the target environment based on comparison result of the comparing, further comprises:
if no unique key is defined in the target dataset base table, determining that the primary key of the target dataset base table is set to the unique key of the target dataset base table.

8. The method of claim 7, wherein the import module comparing the target dataset with the corresponding source dataset and determining processing results of data of the data table that has a data conflict in the target environment based on comparison result, further comprises:
comparing data content of the association data table in the target dataset with data content of the association data table in the source dataset based on a foreign key in the target dataset base table; and
determining processing results of data content of the association data table in the target dataset based on comparison results of the comparing.

9. The method of claim 8, wherein the determining processing results of data content of the association data table in the target dataset based on the comparison results of the comparing, comprises:
if a unique key of the association data table in the target dataset is consistent with the unique key of the association data table in the source dataset, and a primary key of the association data table in the target dataset is consistent with the primary key of the association data table in the source dataset, determining that the data content of the association data table in the target dataset is updated to data content of the association data table in the source dataset, in a case in which the association data table in the source dataset and the association data table in the target dataset comprise another inconsistent field;
if a unique key of the association data table in the target dataset is consistent with the unique key of the association data table in the source dataset, but a primary key of the association data table in the target dataset is inconsistent with the primary key of the association data table in the source dataset, determining that the data content of the association data table in the target dataset is updated to the data content of the association data table in the source dataset, and the primary key of the association data table in the target dataset is modified to the primary key of the association data table in the source dataset;
if a unique key of the association data table in the target dataset is inconsistent with the unique key of the association data table in the source dataset, and the third field corresponding to unique key of the association data table in the source dataset does not exist in the association data table in the target dataset, determining that the third field is inserted into the association data table in the target dataset, and the data content under unique key field in the association data table in the source dataset is updated to the association data table in the target dataset;
if a unique key of the association data table in the target dataset is inconsistent with the unique key of the association data table in the source dataset, and the fourth field corresponding to the unique key of the association data table in the source dataset does not exist in the association data table in the source dataset, determining that the fourth field and data content under the fourth field are deleted in the association data table in the target dataset.

10. A data conflict processing system, wherein the system comprises a transaction configuration module, an export module, and an import module,
the transaction configuration module is configured to: send an export request for target configuration data to an export module in response to a detected export operation, an export request for target configuration data, wherein the target configuration data is data generated by a user setting parameter of a transaction service provided by the system; and send the received target configuration data, the data description file and a release request to the import module in response to the detected release operation;
the export module is configured to: obtain the target configuration data and generating data description file corresponding to the target configuration data in response to the export request, wherein the data description file comprises source dataset related to the target configuration data and description of an association relationship between data tables in each source dataset; and
the import module is configured to: determine processing result of data of the data table that has a data conflict in the target environment in response to the release request based on the data description file, and apply the received target configuration data to processed data of the data table.

11. An apparatus, comprises:
one or more processors; and
one or more memories;
wherein the one or more memories store one or more programs, when the one or more programs are executed by the one or more processors, the apparatus performs the data conflict processing method based on any one of claims 1 to 10.

12. A computer readable storage medium, wherein the storage medium stores an instruction, and when the instruction is executed on a computer, the computer executes the data conflict processing method based on any one of claims 1 to 10.
